Europäisches Patentamt

European Patent Office

Office européen des brevets

(19)

(11) **EP 1 646 026 A2**

## (12) EUROPEAN PATENT APPLICATION

(43) Date of publication:
**12.04.2006 Bulletin 2006/15**

(51) Int Cl.:
***G09G 3/00*** (2006.01)

(21) Application number: **05077149.2**

(22) Date of filing: **21.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **29.09.2004 US 953689**

(71) Applicant: **Delphi Technologies, Inc.**
**Troy, MI 48007 (US)**

(72) Inventors:
• **Scharenbroch, Gregory K.**
**Kokomo, IN 46901 (US)**

• **Smith, Matthew R.**
**Westfield, IN 46074 (US)**
• **Harter Jr., Joseph E.**
**Kokomo, IN 46902 (US)**
• **Zhang, Harry**
**Carmel, IN 46033 (US)**

(74) Representative: **Denton, Michael John**
**Delphi European Headquarters,**
**64 avenue de la Plaine de France,**
**Paris Nord II,**
**B.P. 65059, Tremblay en France**
**95972 Roissy Charles de Gaulle Cedex (FR)**

### (54) System and method of controlling scrolling text display

(57)    A display system and method for presenting scrolling text (24) on a display (22) is provided in a manner that generally minimizes driver distraction. The system includes a display (22) for displaying scrolling text (24). The system also includes a gaze monitor (40) having an imaging camera (30) oriented to capture images of a person (32), such as a vehicle driver, including at least portions of the driver's head (34), and determining a gaze vector $(\overline{g})$ or head orientation vector. The system further includes a controller (50) for determining whether the driver (32) is expected to be viewing the display (22) based on the gaze vector $(\overline{g})$. The controller (50) pauses the scrolling text (24) presented on the display (22) when the driver (32) is not viewing the display (22).

Fig.5.

**Description**

Technical Field

The present invention generally relates to display systems and, more particularly, relates to controlling the display of information to a viewer, such as a driver of a vehicle to minimize driver distraction.

Background of the Invention

Automotive vehicles are increasingly being equipped with various electronic entertainment and infotainment systems generally referred to herein as mobile multimedia (MMM) devices. For example, automotive personal computing (PC) devices have been installed on vehicles to allow personal computing, web browsing, and Internet access. Radio and satellite communication devices, such as radio data systems (RDS) have also been installed on vehicles.

Various vehicle installed mobile multimedia (MMM) devices also allow for the communication of information to occupants in the vehicle. Many mobile multimedia devices typically include a human machine interface (HMI) for enabling a user to interface with the device. For example, the HMI typically includes a display for viewing messages, navigational maps, and other information. As the complexity of mobile multimedia devices generally increases, displays are generally made available with more information that is to be presented in a relatively small conformal display space. In order to reduce cost and utilize space efficiently, vehicle manufacturers often prefer smaller displays. However, in order for small displays to provide large amounts of text information, the text may be presented on the display as scrolling text. For example, in an RDS radio system, the RDS radio information, which may include artist and song title, may be presented as text that is scrolled across the display. Scrolling text is text that is scrolled vertically or horizontally on the display as a single or plurality of lines of text. Thus, only a portion of the text message may be viewable at a given time.

While scrolling text offers the ability to present large amounts of information in a smaller display space, the scrolling text can annoy the driver and pose a distraction, since the scrolling text is generally displayed at a predetermined rate. When scrolling text is presented on a display, the driver may feel a desire to keep his or her eyes fixed on the display to acquire the text message information. Excessive driver attention to scrolling text may therefore cause a distraction. On the other hand, the driver may be unable to acquire important information if the driver focuses attention away from the display. This may lead to frustration by the driver.

It is therefore desirable to provide for a system and method for presenting scrolling text information on a display in a manner that minimizes distraction and effectively presents information to a viewer. It is further desirable to provide for a system and method for presenting scrolling text information on a vehicle display in a manner that is convenient to the driver of a vehicle.

Summary of the Invention

The present invention provides for a display system and method of controlling the display of scrolling text information on a display in a manner that generally minimizes driver distraction. The display system includes a display for displaying information comprising scrolling text. The system also includes a monitor including an imaging camera oriented to capture images of a person including at least a portion of the head of the person and determining an orientation vector. The system further includes a controller for determining whether the person is expected to be viewing the display based on the orientation vector. The controller further controls the presentation of scrolling text on the display based on whether the person is expected to be viewing the display.

According to a further aspect of the present invention, the display system is particularly well-suited for use on a vehicle to present scrolling text to the driver of the vehicle, while minimizing distraction to the driver. When the driver is not expected to be viewing the display, the scrolling text display is paused so that new text is not presented until the driver redirects attention to the display.

According to another aspect of the present invention, a method is provided for controlling scrolling text on a display based on expected viewing by a person, such as a driver of a vehicle. The method includes the steps of presenting scrolling text on a display, and capturing images of a person including at least a portion of the head of the person. The method also includes the steps of determining an orientation vector based on the captured images, and determining whether the person is expected to be viewing the display based on the orientation vector. The method further includes the step of controlling the presentation of scrolling text on the display based on whether or not the person is expected to be viewing the display.

These and other features, advantages and objects of the present invention will be further understood and appreciated by those skilled in the art by reference to the following specification, claims and appended drawings.

Brief Description of the Drawings

The present invention will now be described, by way of example, with reference to the accompanying drawings, in which:

FIG. 1 is a front view of a vehicle dash having a mobile multimedia device display and a gaze monitor imaging camera according to the present invention;
FIG. 2 is a top perspective view of the projection of the camera towards the face of a driver of the vehicle in a first position;

FIG. 3 is a top perspective view of the projection of the camera towards the face of a driver in a second position;

FIG. 4 is a side perspective view of the projection of the camera towards the face of the driver;

FIG. 5 is a block diagram illustrating a gaze monitor and HMI controller of the display system for controlling scrolling text;

FIG. 6 is a flow diagram illustrating a routine for determining a gaze vector of the driver; and

FIG. 7 is a flow diagram illustrating a routine for controlling scrolling text on the display based on the gaze vector according to the present invention.

Description of the Preferred Embodiments

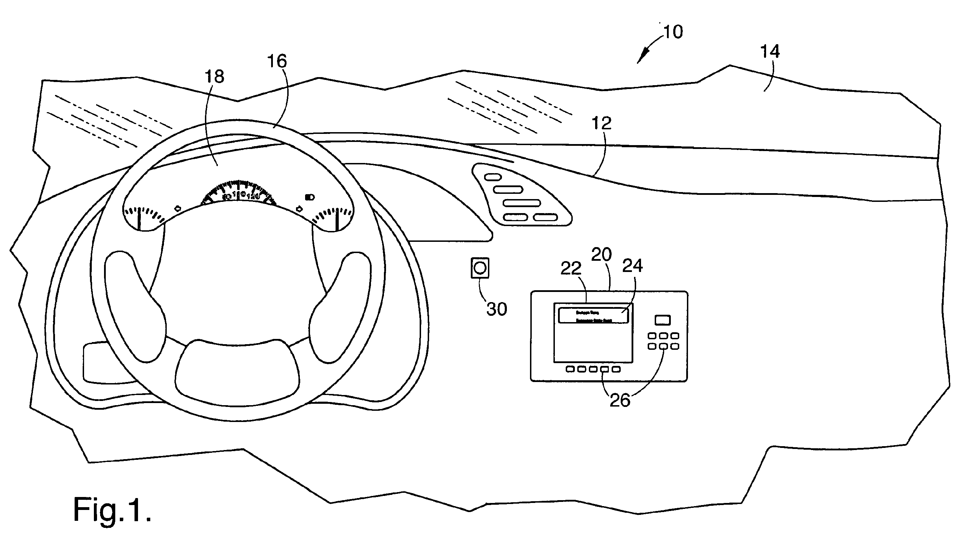

Referring now to FIGS. 1-3, the passenger compartment (cockpit) of a vehicle 10 is generally shown equipped with a display system that monitors the head portion of the driver of the vehicle 10 and controls the display of scrolling text 24 on a display 22. As shown in FIG. 1, the vehicle 10 includes a dash panel 12 generally located in front of the driver and front passenger seats and below the front windshield 14. An instrument cluster is conventionally located in the vehicle dash 12 at the front of the passenger compartment, forward of the steering wheel 16 and steering column.

Centrally mounted within the dash 12 is an electronic device 20, such as a mobile multimedia device which is generally accessible to both the driver of the vehicle and another front passenger. The electronic device 20 may include any of a variety of information and entertainment devices commonly known in the art. For example, the electronic device may include any one of or a combination of the following devices: an automotive personal computing device, a web browser, an Internet access device, a satellite communication device, a mobile multimedia device, a radio, a television, a DVD player, a navigation system, a game system, a phone/address book lookup system, and any other types of electronic devices which employ a display for displaying text.

The infotainment device includes human machine interface (HMI) inputs 26 for allowing occupants of the vehicle to interface via input selections. The electronic device 20 also includes an HMI output in the form of a display 22 for displaying messages and other information. The display 20 may include any display that is configurable to display scrolling text 24, such as a liquid crystal display (LCD), light emitting diode (LED) display, plasma display, and tube displays. The scrolling text may be scrolled vertically or horizontally as single or multiple lines of text. With scrolling text, only a portion of the text message may be viewable at a given time. This enables a large amount of text information to be displayed on the display 22 than would otherwise be viewable in a single display frame.

The display system also has a monitor (gaze monitor) including one or more video imaging cameras for generating video images of the driver of the vehicle 10. The acquired video images are processed for tracking the head portion of the driver to monitor facial characteristics, such as the driver's eyes, to determine a driver's orientation vector (e.g., gaze vector) based on eye gaze and/or head orientation. The driver gaze vector is used to determine whether the driver is expected to be viewing the display 22. If the driver is expected to be viewing the display 22, the scrolling text 24 may be presented on the display 22 at a first rate. If the driver is not expected to be viewing the display 22, the scrolling text 24 is presented at a second rate, which may be paused (i.e., rate equals zero), so that the driver can direct attention elsewhere and not miss the displayed message.

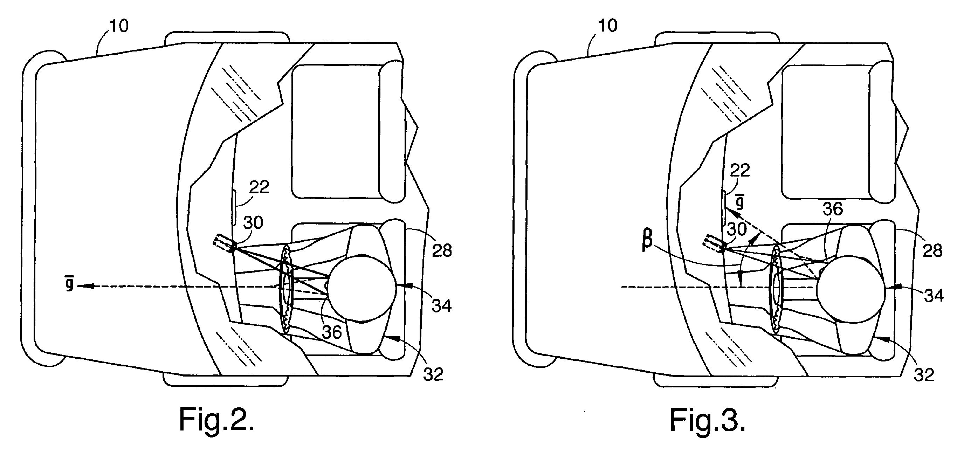

As seen in FIGS. 2 and 3, the imaging camera 30 is shown mounted in the dash 12 such that the camera 30 captures successive video image frames of the region where the driver 32 of the vehicle 10 is expected to be located during normal vehicle driving. More particularly, the video imaging camera 30 captures at least a portion of the driver's head 34, particularly the face including one or both eyes 36 and the surrounding ocular features generally formed in the area referred to as the ocular adnexa. The acquired video images are then processed to determine driver gaze $\bar{g}$.

In FIG. 3, the camera 30 is shown capturing images of the head 34 of the driver 32 seated in the driver's seat 28 when the driver is looking directly forward along gaze vector $\bar{g}$. In this first position, the driver's head 34 and eyes 36 are oriented along the gaze vector $\bar{g}$ indicative of the driver looking directly forward along the longitudinal axis of the vehicle 10. In FIG. 3, the driver's head 34 is shown oriented in a gaze vector $\bar{g}$ directed toward the display 22, which is indicative of the driver 32 expected to be viewing the display 22. In this position, the gaze vector $\bar{g}$ is oriented at an angle β relative to the longitudinal axis of the vehicle 10. It should be appreciated that by viewing the driver's head orientation and/or eye gaze, the gaze monitor determines gaze vector $\bar{g}$, which can then be used to determine whether or not the driver 32 is expected to be viewing the display 22.

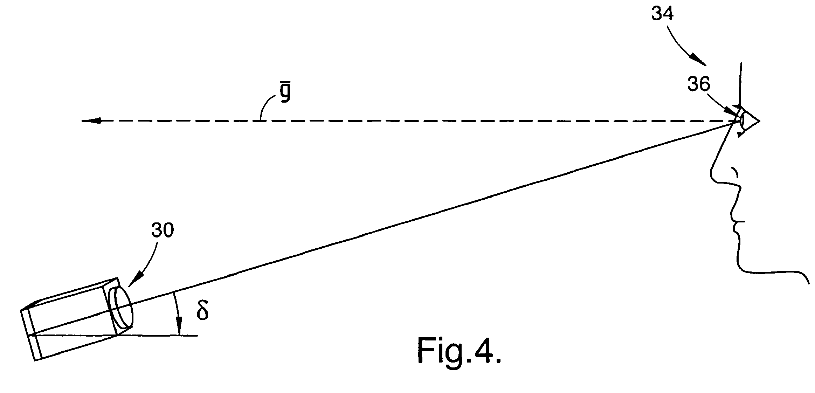

Referring to FIG. 4, the imaging camera 30 is shown focused at an inclination angle δ relative to the horizontal plane of the vehicle 10. The inclination angle δ is within a range of fifteen to thirty degrees (15˚ to 30˚). An inclination range δ in the range of fifteen to thirty degrees (15˚ to 30˚) provides a clear view of the driver's head 34 and ocular features including one or both eyeballs 36 and the pupil of such eyeballs, the superior and inferior eyelids, and the palpebral fissure space between the eyelids.

While the imaging camera 30 is shown mounted in the dash 12 in a position between the display 22 and a point directly in front of the driver's seat 28 of the vehicle, it should be appreciated that the imaging camera 30 may be located elsewhere. For example, the imaging camera 30 may be located in or on top of the dash 12 in a region generally in front of the driver's seat 28, or may be mounted interior on or near the rearview mirror, or may be mounted in the A-pillar, or may be located elsewhere in position suitable to capture images of the head 34 of the driver 32 sufficient to determine an expected driver gaze $\overline{g}$ .

The video camera 30 may include a CCD/CMOS active-pixel digital image sensor. One example of a CMOS active-pixel digital image sensor is Model No. PP-0330, commercially available from Photobit, which has a resolution of about 640 H x 480 V. It should be appreciated that other cameras, including less costly and less sophisticated video cameras, may be employed.

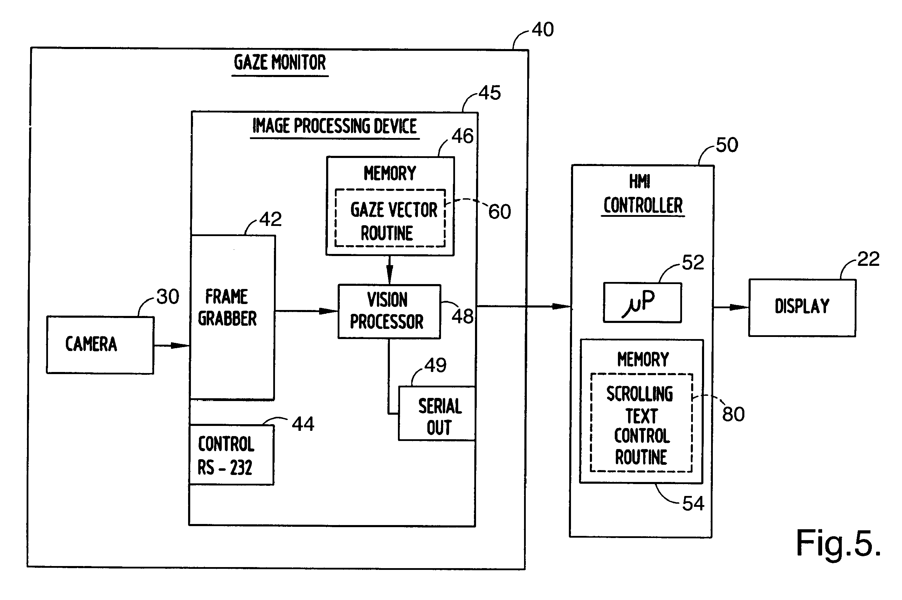

Referring to FIG. 5, the gaze monitor 40 is shown having an image processing device 45 receiving the captured video images from camera 30. The image processing device 45 includes a frame grabber 42 for receiving the video frames generated by the camera 30. The image processing device 45 also includes a vision processor 48 for processing the video frames. The image processing device 45 further includes memory 46, such as random access memory (RAM), read-only memory (ROM), and other memory as should be readily apparent to those skilled in the art. The vision processor 48 is configured to perform one or more routines to identify one or more facial characteristics of the driver and to determine an expected gaze vector of the driver. This may be achieved by processing a gaze vector routine 60 stored in memory 46.

The gaze monitor 40 also has a camera control function via RS-232 logic 44 which allows for control of the video imaging camera 30. Control of the video imaging camera 30 may include automatic adjustment of the pointing orientation of the video imaging camera 30. For example, the video imaging camera 30 may be repositioned to focus on an identifiable feature, and may scan a region in search of an identifiable feature, including the driver's face and, more particularly, one or both eyes. The gaze vector output is communicated via a serial output 49 to an HMI controller 50. Further control of the camera 30 may include adjustment of focus and magnification as may be necessary to track one or more identifiable features.

The HMI controller 50 includes a microprocessor-based controller having a microprocessor 52 and memory 54. Memory 54 may include RAM, ROM, EEPROM, and other memory as should be evident to those skilled in the art. The HMI controller 50 is programmed to include a scrolling text control routine 80 for controlling the presentation of scrolling text on display 22 based on the determined driver gaze vector $\overline{g}$.

The HMI controller 50 provides output control signals to display 22 to control the scrolling text to allow scrolling text to be displayed when the driver is determined to be viewing the display 22 and to pause (stop) the scrolling text displayed when the driver is not determined to be viewing the display 22. This enables the driver to direct attention elsewhere such that the displayed information is frozen and is not missed. The driver may subsequently redirect attention back to the display and, when the driver is determined to be viewing the display, the scrolling text is again presented on the display 22.

In the embodiment shown, the video images are processed by a gaze monitor 40 and are further processed by a separate HMI controller 50 to control scrolling text displayed on the display 22. The use of a separate gaze monitor 40 and HMI controller 50 enables the present invention to be employed on vehicles equipped with some portion of the control devices, such as a vehicle already equipped with a gaze monitor. While separate control devices 40 and 50 are shown and described herein, it should be appreciated that the video image processing and scrolling text control may be handled by a single controller, or may be provided in any of a number of control devices having suitable memory and processing capability.

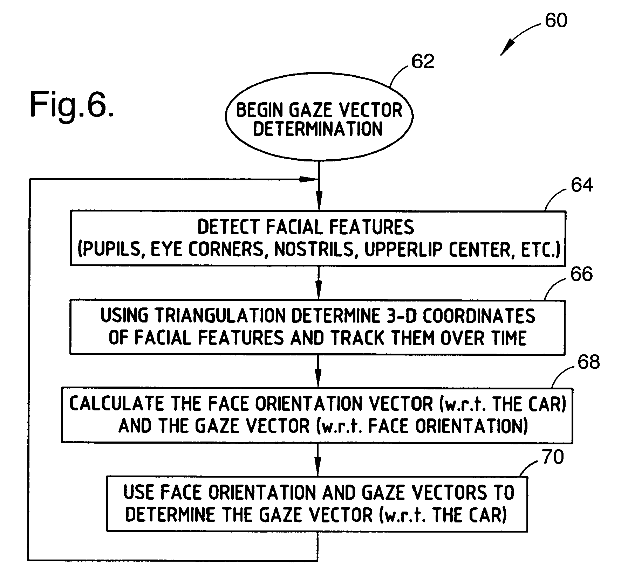

In FIG. 6, the driver gaze vector routine 60 is shown for determining the gaze vector $\overline{g}$ of the driver of the vehicle. The routine 60 begins at step 62 and proceeds to step 64 to detect one or more facial features of the driver of the vehicle including the eye pupils, eye corners, nostrils, upper lip, and other features. Once the facial features of the head of the driver have been detected, routine 60 determines the three-dimensional coordinates of the facial features of the driver's head using triangulation and tracks the facial features over time, in step 66.

Given the tracked facial features, routine 60 calculates the face orientation vector of the driver's head $\overline{h}$ = ($h_x$, $h_y$, $h_z$) with regard to the vehicle, and further calculates the gaze vector with regard to the driver's face orientation in step 68. Finally, in step 70, routine 60 uses the face orientation vector $\overline{h}$ and gaze vector with regard thereto to determine the eye gaze vector $\overline{g}=(g_x,g_y,g_z)$ with regard to the vehicle (car), before returning to step 64. Accordingly, routine 60 determines an expected eye gaze vector $\overline{g}$ of the driver of the vehicle based on the face orientation and gaze vector.

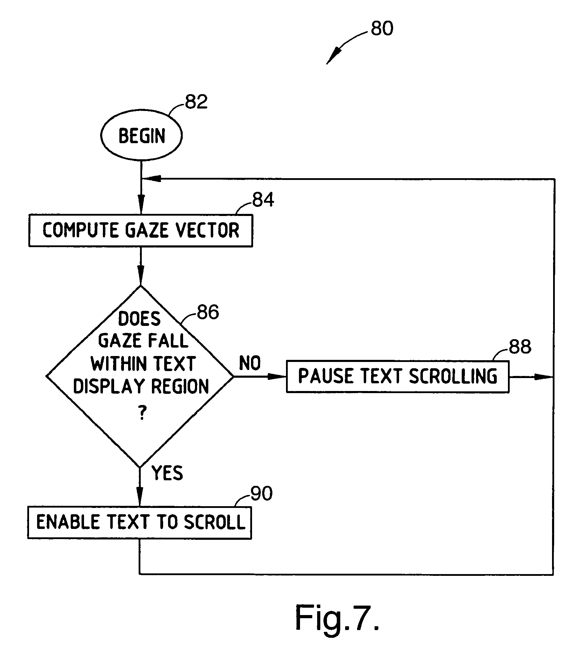

Referring to FIG. 7, the scrolling text routine 80 is shown for controlling the presentation of scrolling text on the display based on the driver gaze vector. Routine 80 begins at step 82 and proceeds to compute the gaze vector $\overline{g}$ in step 84. The gaze vector $\overline{g}$ is computed as described in connection with routine 60 in FIG. 6, according to one example.

Once the gaze vector $\overline{g}$ has been computed, routine 80 proceeds to decision step 86 to determine if the gaze vector $\overline{g}$ falls within a text display region. The text display region may be a predetermined region in the general area of the display that presents the scrolling text. The text display region may be configured to be the near identical viewing region of the display or may include an enlarged area around the display.

If the gaze vector falls within the text display region, routine 80 enables the displayed text to be scrolled in step 90. This allows for the continuous presentation of scrolling text on the display. If the gaze vector $\bar{g}$ does not fall within the text display region, indicative of the driver not expected to be viewing the display, then routine 80 pauses the text scrolling in step 88. This essentially freezes the text on the display to enable the driver to direct attention elsewhere and, upon the driver returning to view the display, the same text information remains on the display, at least momentarily. It should be appreciated that routine 80 may include a delay before re-enabling the text to scroll, such that the driver may re-read the line of text paused on the display before the scrolling of the text occurs.

Accordingly, the display system of the present invention advantageously controls the presentation of scrolling text on a display in a manner that minimizes distraction and effectively presents the information to a viewer. The display system is particularly useful for presenting scrolling text information on a vehicle display in a manner that is convenient to the driver of the vehicle and makes the use of the display less of a distraction. While the display system is shown and described herein in connection with controlling scrolling text based on viewing of a driver of a vehicle, it should be appreciated that the display system may likewise be applicable to controlling any of a number of displays based on viewing by any person on or off a vehicle.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

**Claims**

1. A display system for displaying scrolling text information, said system comprising:

   a display (22) for displaying information comprising scrolling text (24);
   a monitor (40) comprising an imaging camera (30) oriented to capture images of a person (32) including at least a portion of the head (34) of the person (32) and determining an orientation vector ($\bar{g}$); and
   a controller (50) for determining whether the person (32) is expected to be viewing the display (22) based on the orientation vector ($\bar{g}$), said controller (50) further controlling the presentation of scrolling text (24) on the display (22) based on whether the person (32) is expected to be viewing the display (22).

2. The system as defined in claim 1, wherein the controller (30) controls the display of scrolling text (24) to present scrolling text at a first rate when the person (32) is expected to be viewing the display (22) and to present scrolling text at a second slower rate when the person (32) is not expected to be viewing the display (22).

3. The system as defined in claim 2, wherein the second rate is substantially zero.

4. The system as defined in claim 1, wherein the monitor (40) monitors an eye (36) of the person (32) and determines the orientation vector ($\bar{g}$) as a function of eye gaze.

5. The system as defined in claim 1, wherein the monitor (40) monitors the head (34) of the person (32) and determines the orientation vector ($\bar{g}$) as a function of head orientation ($\bar{h}$).

6. The system as defined in claim 1, wherein the display system is employed on a vehicle (10) and the gaze monitor (40) monitors a driver (32) of the vehicle (10).

7. A display system for displaying scrolling text information in a vehicle, said system comprising:

   a display located in a vehicle for displaying information comprising scrolling text;
   a monitor comprising an imaging camera oriented to capture images of a driver of the vehicle including at least a portion of the head of the driver and determining an orientation vector; and
   a controller for determining whether the driver is expected to be viewing the display based on the orientation vector, said controller further controlling the presentation of scrolling text on the display based on whether the driver is expected to be viewing the display.

8. The system as defined in claim 7, wherein the controller controls the display of scrolling text to present scrolling text at a first rate when the person is expected to be viewing the display and to present scrolling text at a second slower rate when the person is not expected to be viewing the display.

9. The system as defined in claim 8, wherein the second rate is substantially zero.

10. The system as defined in claim 7, wherein the monitor monitors an eye of the person and determines the orientation vector as a function of eye gaze.

11. The system as defined in claim 7, wherein the monitor monitors the head of the drive and determines the orientation vector as a function of head orientation.

**12.** A method of controlling scrolling text (24) on a display (22) based on expected viewing by a person (32), said method comprising the steps of:

presenting scrolling text (24) on a display (22); capturing images (64) of a person (32) including at least a portion of the head (34) of the person (32); determining (68) an orientation vector ($\overline{g}$) based on the captured images; determining (86) whether the person is expected to be viewing the display (22) based on the orientation vector ($\overline{g}$); and controlling (88 or 90) the presentation of scrolling text (24) on the display (22) based on whether or not the person (32) is expected to be viewing the display (22).

**13.** The method as defined in claim 12, wherein the step of controlling the presentation of scrolling text (24) on the display (22) comprises reducing (88) rate of scrolling text (24) on the display (22) when the person (32) is not expected to be viewing the display (22).

**14.** The method as defined in claim 13, wherein the step of reducing the rate of scrolling text (24) comprises pausing (88) the scrolling of text.

**15.** The method as defined in claim 14 further comprising the step of increasing (90) the rate of scrolling text (24) when the person (32) is expected to be viewing the display (22).

**16.** The method as defined in claim 12, wherein the step of determining an orientation vector ($\overline{g}$) comprises monitoring an eye (36) of the person (32) and determining an eye gaze vector.

**17.** The method as defined in claim 12, wherein the step of determining an orientation vector ($\overline{g}$) comprises monitoring the head (34) of the person (32) and determining a head orientation vector ($\overline{h}$).

**18.** The method as defined in claim 12, wherein the method is employed in a vehicle (10) to monitor a driver (32) of the vehicle (10).

**19.** A method of controlling scrolling text presented in a vehicle based on expected viewing by a driver of the vehicle, said method comprising the steps of:

presenting scrolling text on a display; capturing images of a driver of the vehicle including at least a portion of the head of the driver; determining an orientation vector based on the captured images; determining whether the driver is expected to be viewing the display based on the orientation vector; and controlling the presentation of scrolling text on the display based on whether or not the driver is expected to be viewing the display.

**20.** The method as defined in claim 19, wherein the step of controlling the scrolling text on the display comprises reducing rate of scrolling text on the display when the person is not expected to be viewing the display.

**21.** The method as defined in claim 20, wherein the step of reducing the rate of scrolling comprises pausing the scrolling text.

**22.** The method as defined in claim 21 further comprising the step of increasing the rate of scrolling text when the person is expected to be viewing the display.

**23.** The method as defined in claim 19, wherein the step of determining an orientation vector comprises monitoring an eye of the person and determining an eye gaze vector.

**24.** The method as defined in claim 19, wherein the step of determining an orientation vector comprises monitoring the head of the driver and determining a head orientation vector.

Fig.1.

EP 1 646 026 A2

Fig.2.

Fig.3.

EP 1 646 026 A2

Fig.4.

EP 1 646 026 A2

Fig.5.

EP 1 646 026 A2

EP 1 646 026 A2

Fig.6.

60

62

( BEGIN GAZE VECTOR
DETERMINATION )

64

DETECT FACIAL FEATURES
(PUPILS, EYE CORNERS, NOSTRILS, UPPERLIP CENTER, ETC.)

66

USING TRIANGULATION DETERMINE 3-D COORDINATES
OF FACIAL FEATURES AND TRACK THEM OVER TIME

68

CALCULATE THE FACE ORIENTATION VECTOR (w.r.t. THE CAR)
AND THE GAZE VECTOR (w.r.t. FACE ORIENTATION)

70

USE FACE ORIENTATION AND GAZE VECTORS TO
DETERMINE THE GAZE VECTOR (w.r.t. THE CAR)

EP 1 646 026 A2

80

82

( BEGIN )

84

COMPUTE GAZE VECTOR

86

DOES GAZE FALL WITHIN TEXT DISPLAY REGION ?

NO → PAUSE TEXT SCROLLING

88

YES

ENABLE TEXT TO SCROLL

90

Fig.7.